# EUROPEAN PATENT APPLICATION

(11) **EP 4 215 556 A1**
(43) Date of publication of application: **26.07.2023**
(21) Application number: 21868670.7
(22) Date of filing: 16.09.2021
(51) Int. Cl.: C08F 236/12, C08F 8/04

(54) **LIQUID HYDROGENATED NITRILE-BUTADIENE RUBBER, PREPARATION METHOD THEREFOR AND USE THEREOF**

(30) Priority: 16.09.2020 CN 202010975532
(71) Applicant: Zannan Scitech Co., Ltd., Shanghai 201104 (CN)
(72) Inventor: ZHAN, Zheng-Yun James, Shanghai 201104 (CN)
(74) Representative: Biggi, Cristina
(86) International application number: PCT/CN2021/118659
(87) International publication number: WO 2022/057848

(57) **Abstract**

Disclosed are a liquid hydrogenated nitrile-butadiene rubber, a preparation method therefor and the use thereof. In the liquid hydrogenated nitrile-butadiene rubber: the content of acrylonitrile is 15-50%; the hydrogenation saturation is 75-99.5%; the weight-average molecular weight (Mw) is 3,000-60,000; the molecular weight polydispersity index (PDI) is 2.0-8.0; and the glass transition temperature (Tg) is lower than -28°C. The liquid hydrogenated nitrile-butadiene rubber is low in molecular weight and wide in molecular weight polydispersity, simultaneously has an excellent fluidity during processing and excellent mechanical properties after curing, and has a unique application value in the field of special rubbers; and the preparation method therefor is simple and feasible in terms of the process.

## Description

### TECHNOLOGY FIELD OF THE INVENTION

The present invention relates to a novel class of the liquid hydrogenated butadiene nitrile rubber (LHNBR), its preparation method and applications.

### BACKGROUND TECHNOLOGY OF THE INVENTION

Hydrogenated nitrile butadiene rubber (HNBR) plays an important role in aerospace, petroleum, automotive and energy applications with its excellent properties. One of the special HNBR grades is LHNBR, which can be combined with reinforcing fillers, vulcanisation accelerators and other rubber additives to produce a vulcanized rubber with good elasticity, better flow and easier processing. In addition, it has important applications in the special adhesives, sealants and shaped complex elastic products, especially as a possible matrix material as special composite materials such as electromagnetic shielding coatings, oil resistant coatings, battery corrosion resistant coatings sealing accessories, damping and noise reduction coatings.

According to the literature, there were two technical routes for the preparation of liquid hydrogenated nitrile butadiene rubber (LHNBR): one was prepared by catalyzed hydrogenation of liquid nitrile butadiene rubber (LNBR) in solution, and another method was to prepare by dissolving the solid NBR, then carried out the degradation and followed by the catalyzed hydrogenation. Patent CN104231118A disclosed a hydrogenated LNBR capped with hydroxyl group (LNBR-OH) and its preparation method, in which the LNBR-OH was hydrogenated by a liquid non-homogeneous reaction using a catalytic hydrogenation system consisting of hydrazine hydrate-boric acid-hydrogen peroxide to obtain a hydrogenated LNBR-OH rubber without gel byproduct and with a hydrogenation degree of more than 90%. CN102481562A disclosed a method for the preparation of the LHNBR by dissolving NBR in a chlorobenzene solvent, and a certain amount of 1-hexene is added, stirred for 2hours at 22°C, followed by adding the coupound catalyst "1,3-bis-(2,4,6-trimethylphenyl)-2-imidazolylmethylene)-(tricyclohexylphosphine)-(phenylmethylene)ruthenium dichloride" (the second generation of Grubbs catalyst), and stirred for 2hours at 22°C to completed the degradation of NBR; after degradation of NBR, the hydrogenation catalyst "tris-(triphenylphosphine)-rhodium chloride" (Wilkinson's catalyst) was then added and the hydrogenation reaction was stirred at 138°C for 4hours.. The result was a LHNBR with a molecular weight (Mw) between 10,000 and 50,000 and a molecular weight polydispersity index (PDI) was less than 2.0. Since some hydrogenation catalysts such as Wilkinson's catalysts only hydrogenate the carbon-carbon double bond in NBR during the hydrogenation reaction, the result was not possible to change the molecular weight polydispersity index (PDI) of the corresponding LHNBR in the hydrogenation reaction.

Obviously, the existing techniques for the preparation of LHNBR were still not good enough to prepare different kinds of LHNBR products, and it was still needed to develop more LHNBR products with better properties and diversity of applications. For example, in the method disclosed in CN102481562A, the entire preparation process undergoes two process steps: the degradation and hydrogenation in two steps and two different kinds of metal catalysts used in each step, resulting in a relatively narrow molecular weight polydispersity (PDI < 2.0), and it may be difficult to balance the fluidity during processing and the mechanical properties after curing (e.g. elasticity and strength, etc.), however if the molecular weight is high, although the mechanical properties were good after curing, but the fluidity is poor, which means that it was not only difficult to dry during the preparation process, but also very undesirable when used to prepare adhesives, sealants and cast shaped complex elastic products.

### SUMMARY OF THE INVENTION

The present invention is designed to solve the problem of the strength and flowability balancing of LHNBR during the processing and mechanical properties after LHBNR curing, thereby to provide different kinds of new LHNBR products and its preparation method and application. The LHNBR of the present invention has not only low molecular weight but also wide molecular weight polydispersity, as well as excellent fluidity during processing and excellent mechanical properties after curing; and the preparation method of the present invention was also quite simple and feasible process.

In order to achieve the above objectives, the invention used the following technical solutions:

### The First Technical Solution:

A liquid hydrogenated nitrile rubber (LHNBR), wherein:
the acrylonitrile (ACN) content is from 15% to 50%;
the hydrogenation degree is from 75% to 99.5%;
the weight average molecular weight (Mw) is from 3,000 to 60,000;
the molecular weight polydispersity index (PDI) is 2.0 to 8.0;
the glass transition temperature (Tg) is below -28°C.

In the present invention, the acrylonitrile (ACN) content of the LHNBR is preferably from 17% to 45%, e.g., 25%, 33% or 43%.

In the present invention, the LHNBR has a hydrogenation degree of preferably 80% to 99%, more preferably from 90% to 99%, e.g., 91%, 92%, 95% or 96%.

In the present invention, the LHNBR has a weight average molecular weight (Mw) preferably in the range of 5,000 to 50,000, more preferably in the range of 8,000 to 20,000 or 24,000 to 46,000.

In the present invention, the molecular weight polydispersity index (PDI) of LHNBR is preferably in the range of 2.0 to 6.0.

In the present invention, the LHNBR had a glass transition temperature (Tg) preferably below -35°C, better below -40°C.

In the present invention, the LHNBR has an extrapolated glass transition onset temperature (Tig) lower than -30°C, preferably lower than -35°C, and more preferably lower than -45°C.

In the present invention, the LHNBR has an extrapolated end of the glass transition temperature (Teg) lower than -25°C, preferably lower than 30°C, and better lower than -35°C.

In the present invention, the LHNBR preferably a kind of LHNBR as shown in the following formula IIIa or IIIb, 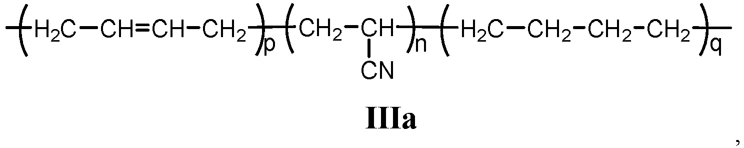 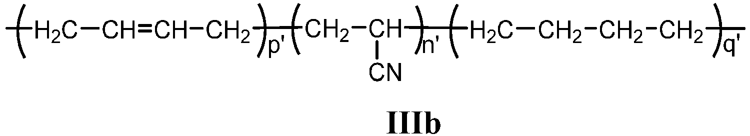 wherein,
p = 1-150; p'= 1-150; q = 30~590; q'= 30-590; n = 20-500; n' = 20~500.
In the present invention, preferably in the LHNBR:
the acrylonitrile (ACN) content of 17 to 45 per cent;
the hydrogenation degree is from 80% to 99%;
the weight average molecular weight (Mw) is from 5,000 to 50,000;
the molecular weight polydispersity index (PDI) is from 2.0 to 6.0;
the glass transition temperature (Tg) is below -28°C.

In the present invention, preferably in the LHNBR:
the acrylonitrile (ACN) content is 33%;
the hydrogenation degree is 99%;
the weight average molecular weight (Mw) is from 8,000 to 20,000;
the molecular weight polydispersity index (PDI) is from 2.5 to 3.5;
the glass transition temperature (Tg) is below -35°C.

In the present invention, preferably in the LHNBR:
the acrylonitrile (ACN) content is 25% to 43%;
the hydrogenation degree is 91% to 99%;
the weight average molecular weight (Mw) is from24,000~46,000;
the molecular weight polydispersity index (PDI) is from 2.1 to 5.6;
the glass transition temperature (Tg) below -29°C.

In a preferable embodiment of the present invention, wherein the LHNBR is:
the acrylonitrile(ACN) content of 33%;
the hydrogenation degree is 92%;
the weight average molecular weight (Mw) is from 37,000 to 38,000;
the molecular weight polydispersity index (PDI) is 2.1;
the glass transition temperature (Tg) is -31.2°C.

In a preferable embodiment of the present invention, wherein the LHNBR is:
the acrylonitrile(ACN) content is 33%;
the hydrogenation degree is 96%;
the weight average molecular weight (Mw) is from 44,000 to 45,000;
the molecular weight polydispersity index (PDI) is 2.2;
the glass transition temperature (Tg) is -2.5°C.

In a preferable embodiment of the present invention, wherein the LHNBR is:
the acrylonitrile(ACN) content is 33%;
the hydrogenation degree is 99%;
the weight average molecular weight (Mw) is from 45,000 to 46,000;
the molecular weight polydispersity index (PDI) is 2.2;
the glass transition temperature (Tg) is -29.8°C.

In a preferable embodiment of the present invention, wherein the LHNBR is:
the acrylonitrile(ACN) content is 33%;
the hydrogenation degree is 99%;
the weight average molecular weight (Mw) is from 24,000 to 25,000;
the molecular weight polydispersity index (PDI) is 2.4;
the glass transition temperature (Tg) is -30.9°C.

In a preferable embodiment of the present invention, wherein the LHNBR is:
the acrylonitrile(ACN) content is 33%;
the hydrogenation degree is 99%;
the weight average molecular weight (Mw) is from 8,000 to 10,000;
the molecular weight polydispersity index (PDI) is 2.7;
the glass transition temperature (Tg) is -42.8°C.

In a preferable embodiment of the present invention, wherein the LHNBR is:
the acrylonitrile(ACN) content is 33%;
the hydrogenation degree is 99%;
the weight average molecular weight (Mw) is from 16,000 to 17,000;
the molecular weight polydispersity index (PDI) is 3.3;
the glass transition temperature (Tg) is -38.8°C.

In a preferable embodiment of the present invention, wherein the LHNBR is:
the acrylonitrile(ACN) content is 43%;
the hydrogenation degree is 91%;
the weight average molecular weight (Mw) is from 33,000 to 34,000;
the molecular weight polydispersity index (PDI) is 4.3;
the glass transition temperature (Tg) is -30.2°C.

In a preferable embodiment of the present invention, wherein the LHNBR is:
the acrylonitrile content is 25%;
the hydrogenation degree is 95%;
the weight average molecular weight (Mw) is from 33,000 to 34,000;
the molecular weight polydispersity index (PDI) is 5.6;
the glass transition temperature (Tg) is -32.9°C.

### The Second Technical Solution:

A method of preparing LHNBR comprising the steps of: under the protection of an inert gas, in an organic solvent, added the NBR to a degradation reaction and a hydrogenation reaction, or added the NBR to a hydrogenation reaction, and in the presence of a catalyst to obtain the liquid hydrogenated nitrile rubber (LHNBR); wherein the catalyst comprises one or more of Zhan Catalysts as shown in the following general formula **I:**

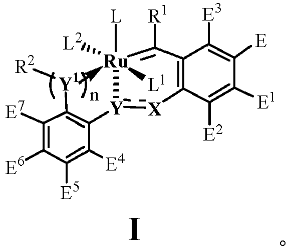

In the present invention, the general formula I was documented in CN200910175790.6, US12684410 and WO2011079439A1, referred to CN200910175790.6, US12684410 and WO2011079439A1 for definitions of the individual substituents in general formula **I.**

In general formula I, L is an electron-donating complex ligand; for example, L may be -PCy₃ or 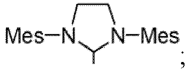
L¹ and L² are independently halogen;
n = 0 or 1;
when n=1, Y¹ is independently nitrogen, oxygen, sulfur, CH₂, substituted or unsubstituted C₁-C₂₀ alkyl, substituted or unsubstituted C₆-C₂₀ aryl, substituted or unsubstituted C₆-C₂₀ aryloxy, substituted or unsubstituted C₁-C₂ heterocyclic aryl, carbonyl, a carbonyl group linked to a substituted or unsubstituted C₁-C₂₀ alkyl, a carbonyl group linked to a substituted or unsubstituted C₁-C₂₀ alkoxy carbonyl, imino, substituted or unsubstituted C₁-C₂₀alkylimino or amino as shown in R_{c}R_{d}N- group; wherein Rc and Rd are independently hydrogen, substituted or unsubstituted C6-C20 aryl, substituted or unsubstituted C₁-C₂ heterocyclic, substituted or unsubstituted C₁-C₂₀ alkyl, formyl, substituted or unsubstituted C₁-C₂₀ alkylcarbonyl, substituted or unsubstituted C₆-C₂₀ aryl formyl or substituted or unsubstituted C₁-C₂ heterocyclic formyl group; or Rc, Rd and the N atom are linked each other to form a ring;
X is nitrogen, oxygen, sulphur, CH, CH₂ or carbonyl group;
Y is nitrogen, oxygen, CH, methylene, substituted or unsubstituted C₁-C₂₀ alkoxy, substituted or unsubstituted C₆-C₂₀ aryl, substituted or unsubstituted C₆-C₂₀ aryl, substituted or unsubstituted C₂-C₂₀ heterocyclic aryl, a carbonyl group linked to a substituted or unsubstituted C₁-C₂₀ alkyl, a carbonyl group linked to a substituted or unsubstituted C₁-C₂₀ alkoxy, an imino group, a substituted or unsubstituted C₁-C₂₀ alkyl imino group or a group as shown in R_{c}R_{d}N-group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkylcarbonyl, substituted or unsubstituted C₆-C₂₀ arylcarbonyl or substituted or unsubstituted C₂-C₂₀ heterocycliccarbonyl;; or Rc, Rd and N atom are linked to form a ring; the parent to which the group indicated by X is linked is Y and the parent to which the group indicated by Y is linked is X; " " between single or double bonds;
R¹ is hydrogen, substituted or unsubstituted C₁-C₂₀ alkyl, substituted or unsubstituted C₁-C₂₀ alkoxy, substituted or unsubstituted C₆-C₂₀ aryl, substituted or unsubstituted C₆-C₂₀ aryloxy or substituted or unsubstituted C₂-C₂₀ heterocyclic;
R² is hydrogen, substituted or unsubstituted C₁-C₂₀ alkyl, substituted or unsubstituted C₁-C₂₀ alkoxy, substituted or unsubstituted C₁-C₂₀ alkylthio, substituted or unsubstituted C₁-C₂₀ alkylsiloxy, substituted or unsubstituted C₂-C₂₀ heterocyclic, substituted or unsubstituted C₆-C₂₀ aryl, C₆-C₂₀ aryloxy, aldehyde, a carbonyl group linked to a substituted or unsubstituted C₁-C₂₀ alkyl, a carbonyl group linked to a substituted or unsubstituted C₆-C₂₀ aryl, a carbonyl group linked to a substituted or unsubstituted C₂-C₂₀ heterocyclic or a group as shown in R_{c}R_{d}N- group; wherein Rc and Rd are independently hydrogen, a formyl group, a substituted or unsubstituted C₁-C₂₀ alkyl formyl group, a substituted or unsubstituted C₆-C₂₀ aryl formyl group or a substituted or unsubstituted C₂-C₂₀ heterocyclic formyl group; or wherein Rc, Rd and the N atom are linked each other to form a ring;
E is hydrogen, halogen, nitro, nitrile, sulfinyl, sulfone, aldehyde, C₁-C₂₀ alkyl, C₁-C₂₀ alkoxy, C₁-C₂₀ alkylthio, C1-C20 alkyl silyl, C₁-C₂₀ alkyl siloxy, C₂-C₂₀ heterocyclic, C₆-C₂₀ aryl, C₆-C₂₀ aryloxy, carbonyl linked to C₁-C₂₀ alkyl, carbonyl linked to C₆-C₂₀ aryl C₆-C₂₀ heterocyclic, carbonyl linked to C₂-C₂₀ heterocyclic, carbonyl linked to C₁-C₂₀ alkoxy, carbonyl linked to C₆-C₂₀ aryloxy, carbonyl linked to C₆-C₂₀ heterocyclic oxy, aminoacyl, carbonyl linked to C₁-C₂₀ alkylamino, carbonyl linked to C₆-C₂₀ arylamino, carbonyl linked to C₂-C₂₀ heterocyclic amino, ureido, substituted or unsubstituted C₁-C₂₀ alkyl ureido, substituted or unsubstituted C₆-C₂₀ aryl ureido, substituted or unsubstituted C₂-C₂₀ heterocyclic ureido, sulfonyl group linked to a C₁-C₂₀ alkyl amino group, sulfonyl group linked to a C₆-C₂₀ aryl amino group, sulfonyl group linked to a C₂-C₂₀ heterocyclic amino group, or a group as shown in R_{c}R_{d}N- group; wherein Rc and Rd are independently hydrogen, substituted or unsubstituted C₆-C₂ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂ aryl formyl, substituted or unsubstituted C₂-C₂₀ heterocyclic formyl, substituted or unsubstituted C₁-C₂₀ alkyl sulfonyl, substituted or unsubstituted C₆-C₂ aryl sulfonyl, or substituted or unsubstituted C₂-C₂₀heterocyclic sulfonyl; or Rc, Rd and the N atom are linked each other to form a ring.
E¹ is hydrogen, halogen, nitro, nitrile, C₁-C₂₀ alkyl, C₁-C₂₀ alkoxy, C₁-C₂₀ alkylthio, C₁-C₂₀ alkasilyl, C₁-C₂₀ alkasiloxy, C₂-C₂₀ heterocyclic, substituted or unsubstituted amino, aminoacyl, carbonyl linked to C₁-C₂₀ alkylamino, C₆-C₂₀ aryl, C₆-C₂₀ aryloxy, sulfinyl, sulfone group, aldehyde group, carbonyl group linked to a C₁-C₂₀ alkyl group, carbonyl group linked to a substituted or unsubstituted C₆-C₂₀ aryl group, carbonyl group linked to a substituted or unsubstituted C₂-C₂₀ heterocyclic group, carbonyl group linked to a C₁-C₂₀ alkoxy group, carbonyl group linked to a C₆-C₂₀ aryloxy group, carbonyl group linked to a C₂-C₂₀ heterocyclic oxy group, urea group, substituted or unsubstituted C₁-C₂₀ alkyl urea group , substituted or unsubstituted C₆-C₂₀ aryl ureido groups or substituted or unsubstituted C₂-C₂₀ heterocyclic ureido groups:
   E² is hydrogen, halogen, C₁-C₂₀ alkyl, C₁-C₂₀ alkoxy, C₁-C₂₀ alkylthio, C₁-C₂₀ alkyl silyl, C₁-C₂₀ alkyl siloxy, aminoacyl, carbonyl linked to C₁-C₂₀ alkylamino, carbonyl linked to C₆-C₂₀ arylamino, carbonyl linked to C₂-C₂₀ heterocyclic amino, C6-C20 aryl, C₆-C₂₀ aryl oxy, C₂-C₂₀ heterocyclic aryl, aldehyde, a carbonyl group linked to a C₁-C₂₀ alkyl group, a carbonyl group linked to a C₆-C₂₀ aryl group, a carbonyl group linked to a C₂-C₂₀ heterocyclic group, a carbonyl group linked to a C₁-C₂₀ alkoxy group, a carbonyl group linked to a C₆-C₂₀ aryloxy group, a carbonyl group linked to a C₂-C₂₀ heterocyclic oxy group or a group as shown in R_{c}R_{d}N- group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, or substituted or unsubstituted C₂-C₂₀ heterocyclic sulfonyl; or Rc, Rd and the N atom are linked each other to form a ring.

E³ is hydrogen, halogen, C₁-C₂₀ alkyl, C₁-C₂₀ alkoxy, C₁-C₂₀ alkylthio, C₁-C₂₀ alkyl siloxy, C₆-C₂₀ aryloxy, C₆-C₂₀ aryl, C₂-C₂₀ heterocyclic aryl, a carbonyl group linked to a C₁-C₂₀ alkoxy, a carbonyl group linked to a substituted or unsubstituted C₆-C₂₀ aryloxy, a carbonyl group linked to a substituted or unsubstituted C₆-C₂₀ heterocyclic aryloxy or a group as shown in R_{c}R_{d}N- group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, or substituted or unsubstituted C₂-C₂₀ heterocyclic sulfonyl; or Rc, Rd and the N atom are linked each other to form a ring.

E⁴, E⁵, E⁶ and E⁷ are independently hydrogen, halogen, nitro, nitrile, sulfinyl, sulfonyl, aldehyde, substituted or unsubstituted C₁-C₂₀ alkyl, substituted or unsubstituted C₁-C₂₀ alkoxy, C₁-C₂₀ alkylthio, C₁-C₂₀ alkasilyl, C₁-C₂₀ alkasiloxy, substituted or unsubstituted C₂-C₂₀ heterocyclic, substituted or unsubstituted amino, amino acyl, carbonyl groups linked to substituted or unsubstituted C₁-C₂₀ alkylamino groups, carbonyl groups linked to substituted or unsubstituted C₆-C₂₀ arylamino groups, carbonyl groups linked to substituted or unsubstituted C₂-C₂₀ heterocyclic amino groups, carbonyl groups linked to substituted or unsubstituted C₁-C₂₀ alkyl groups, carbonyl groups linked to substituted or unsubstituted C₆-C₂₀ aryl groups, carbonyl groups linked to substituted or unsubstituted C₂-C₂₀ heterocyclic group, carbonyl group linked to substituted or unsubstituted C₁-C₂₀ alkoxy, carbonyl group linked to substituted or unsubstituted C6-C20 aryloxy, carbonyl group linked to substituted or unsubstituted C₆-C₂₀ heterocyclic oxy, ureido, substituted or unsubstituted C₁-C₂₀ alkyl ureido, substituted or unsubstituted C₆-C₂₀ aryl ureido, substituted or unsubstituted C₂-C₂₀ heterocyclic based ureido, substituted or unsubstituted C₆-C₂₀ aryl, substituted or unsubstituted C₆-C₂₀ aryloxy, or a group as shown in R_{c}R_{d}N- group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C1-C20 alkyl sulfonyl, substituted or unsubstituted C₆-C₂₀ aryl sulfonyl, or substituted or unsubstituted C₂-C₂₀ heterocyclic sulfonyl; or Rc, Rd and the N atom are linked each other to form a ring.

In the present invention, the general formula I preferably comprises one or more of the following compounds: 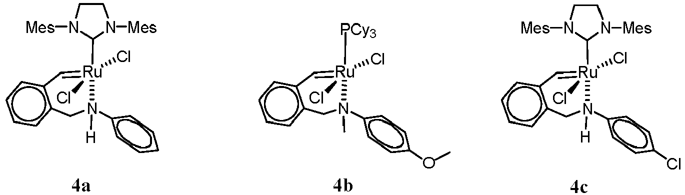 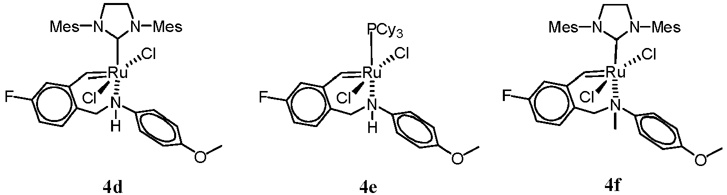 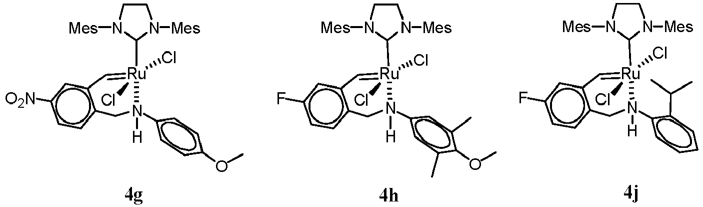 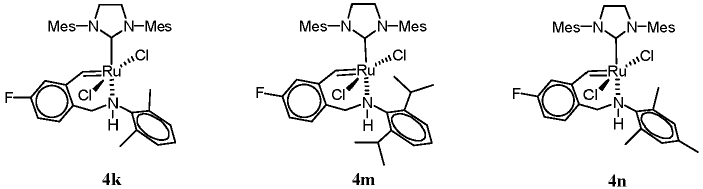 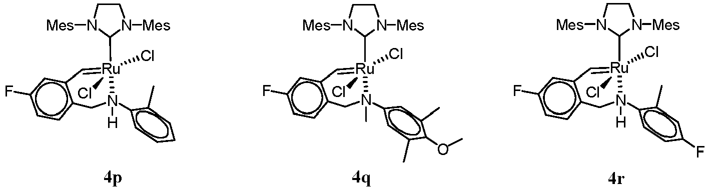 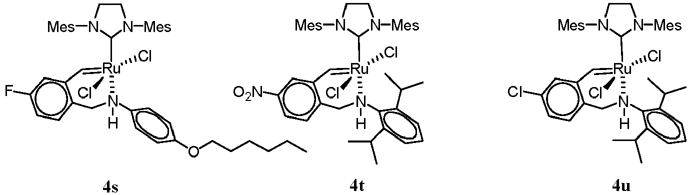 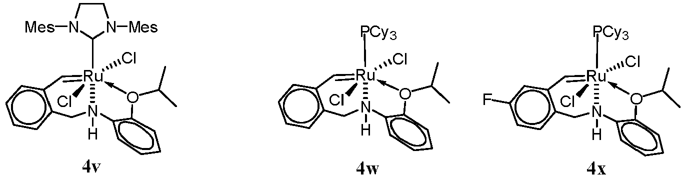 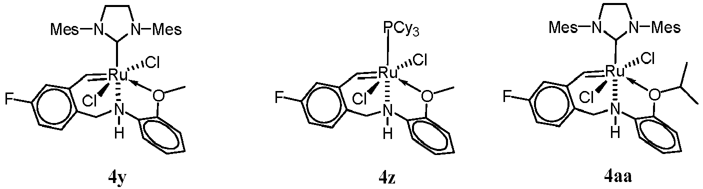 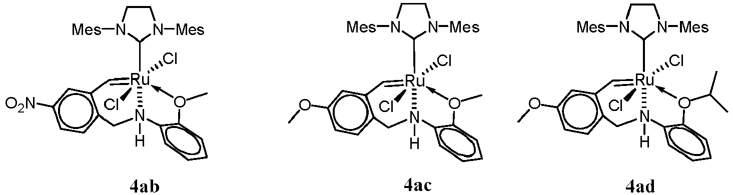 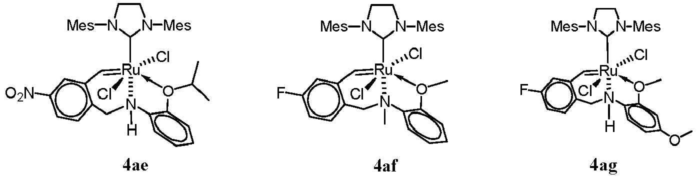 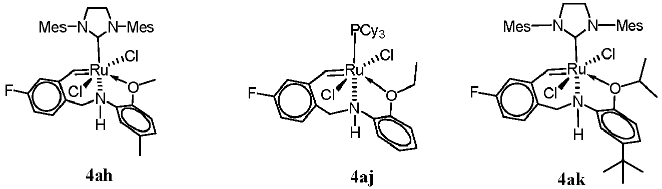 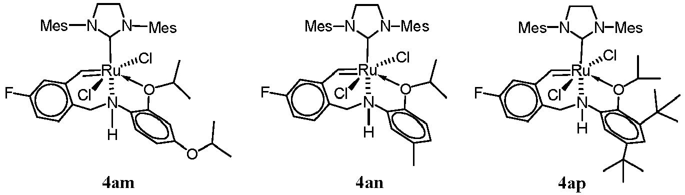 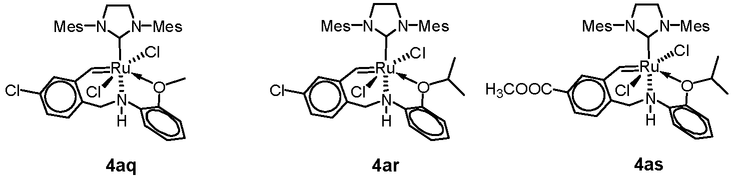 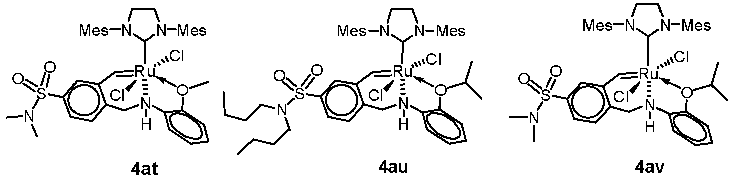 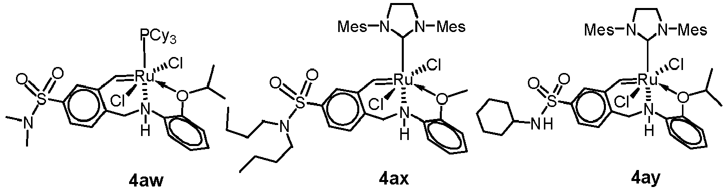 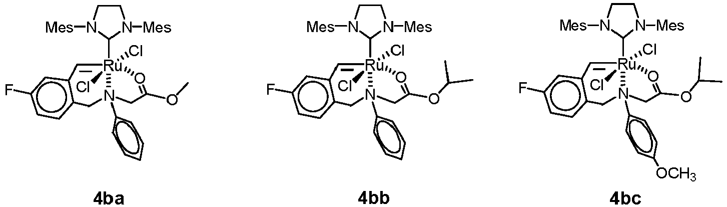 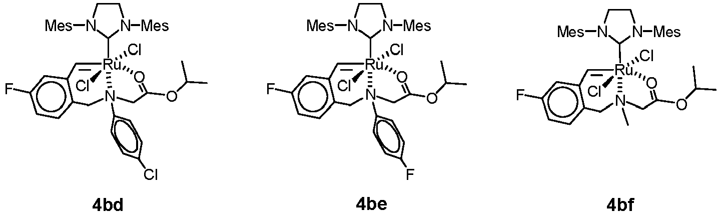 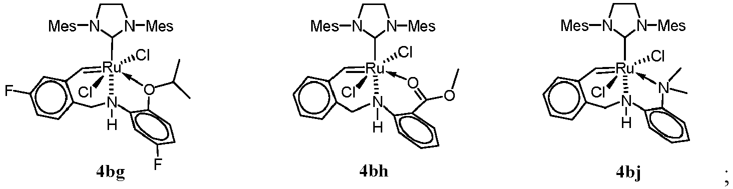 wherein the general formula I is preferably formula 4aa, 4ab, 4f or 4v, more preferably formula 4aa or 4v.

In the present invention, the NBR means a rubber obtained by copolymerisation of butadiene and acrylonitrile.

In the present invention, the NBR may have an acrylonitrile content of 15% to 50%, preferably 17% to 45%, e.g. 25%, 33% or 43%.

In the present invention, preferred, the NBR has a weight average molecular weight of from 3,000 to 60,000, at which point the NBR may be a LNBR, suitable for direct hydrogenation reaction of the NBR.

In the present invention, preferred, the NBR has a Mooney viscosity of 30 to 60, in which case the NBR suitable for a degradation reaction and followed by the hydrogenation reaction.

In the present invention, the NBR may have a molecular weight polydispersity index (PDI) is from 2.0 to 8.0.

In the present invention, preferably, the NBR has a structure as shown in formula II, IIa or IIb as follows: 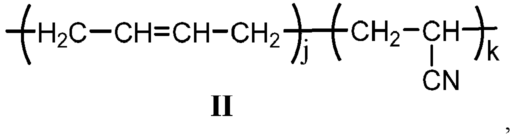 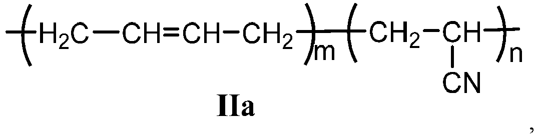 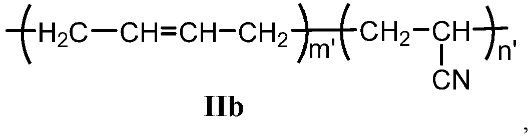 wherein,
the NBR of formula II refers to a solid NBR, wherein j = 100-6,000, for example, it can be 200-6,000, or 300-6,000, or 400-6,000, or 500-6,000, or 600-6,000, or 800-6,000, or 1,200-6,000, or 2,000-6, 000; k = 50-5,000, which can be, e.g., 300-5,000, or 500-5,000, or 800-5,000, or 1,000-5,000, or 2,000-5,000;
The NBR of formula IIa represents liquid NBR prepared by an industrial process and is commercially available, which can be further hydrogenated to produce LHNBR, in fomula IIa, m = 30-600, e.g., it can be 30-500, or 30-400, or 30-300, or 30-200, or 30-100, or 50-80; n = 20-500, for example, it can be 20-450, or 20-400, or 30-300, or 40-200, or 50-100, or 60-80.

The NBR of formula IIb represents LNBR obtained by degradation of the solid NBR of formula II, which can also be further hydrogenated to produce LHNBR, in fomula IIb, m' = 30-600, which can be, e.g., 30-500, or 30-400, or 30-300, or 30-200, or 30-100, or 50-80; n' = 20-500, which can be, e.g., 20-450, or 20- 400, or may be 30-300, or 40-200, or 50-100, or 60-80.

According to one embodiment of the invention, j>m'; k>n'.

In the present invention, the NBR IIa and NBR IIb may be LNBR, and NBR II may be the solid NBR.

In the present invention, the amount of Zhan catalyst may be selected according to the conventional methods, preferably from 0.005% to 0.1%, more preferably from 0.01% to 0.05%, where the percentage of Zhan catalyst was used relative to the NBR.

In the present invention, the temperature of degradation reactionpreferably from 60 to 100°C, more preferably 80°C. The time of degradation reaction may be selected according to the conventional methods, preferably from 0.5 to 10h, more preferably from 1.0 to 6.0 hours, more preferably from 2.0 to 3.0hours..

In the present invention, the amount of hydrogen in the hydrogenation reaction may be a conventional amount for such reactions, preferably the pressure of the hydrogenation reaction system reaches 2 to 15 MPa, better 6 to 10 MPa, e.g., 8 MPa.

In the present invention, the temperature of the hydrogenation reaction may be a conventional temperature for such reactions, preferably from 80 to 200°C, more preferably from 100 to 180°C, further more preferably from 130 to 160°C, e.g., 150°C. The time of the hydrogenation reaction may be selected according to the conventional methods and is from 2 to 6 hours.

In the present invention, the organic solvent may be some solvents commonly used for such reactions, e.g. one or more of the trichloromethane, dichloroethane, acetone and/or chlorobenzene; preferably one or more of chlorobenzene, dichloroethane and trichloromethane; better chlorobenzene or dichloroethane; preferably chlorobenzene. The amount of the organic solvents can be selected according to the conventional methods in the field, preferably from 100 to 300 g of NBR/1L of organic solvent, e.g., 120 g, 160 g, 200 g or 240 g of NBR/1L of organic solvent.

In the present invention, the inert gas may be an inert gas commonly used for such reactions, e.g., argon (Ar) or nitrogen.

In the present invention, the hydrogenation reaction is preferably followed by a post-treatment. The post-treatment may be carried out by conventional methods, generally by removing the organic solvent under negative pressure. The temperature of the post-treatment is from 100 to 150°C, preferably from 130 to 140°C.

In a preferable embodiment of the present invention, the reaction process for the preparation of the LHNBR is as shown in route-1, wherein under the protection of an inert gas, in an organic solvent, hydrogen is passed, and Zhan catalyst is added simultaneously with or after the passage of hydrogen to subject NBR IIa to a hydrogenation reaction to obtainLHNBR IIIa; wherein m, n, p and q are defined as previously described.

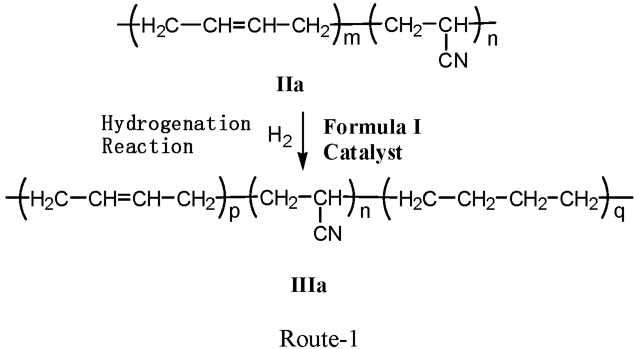

In another preferable embodiment of the present invention, the reaction process for the preparation of the LHNBR is as shown in route-2, wherein under the protection of an inert gas, in an organic solvent, Zhan catalyst is added to subject NBR II to a degradation reaction to obtain NBR IIb; then hydrogen is passed to subject NBR IIb to a hydrogenation reaction to obtain LHNBR IIIb; wherein j, k, m', n', p' and q' are defined as previously described.

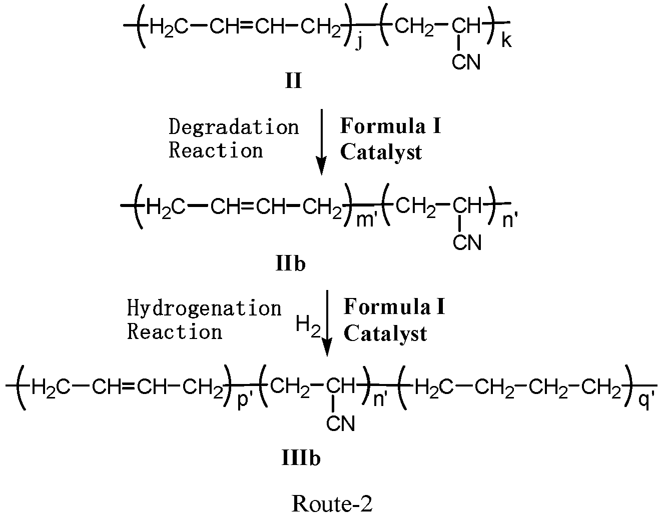

### The Third Technical Solution:

A LHNBR, which is prepared according to the preparation method of the LHNBR.

### The Fourth Technical Solution:

A method for the degradation of NBR comprising the steps of NBR by a degradation reaction in an organic solvent under the protection of an inert gas and in the presence of Zhan catalyst as shown in the general formula I.

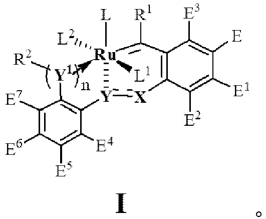

Wherein,
The type and amount of Zhan catalyst are as previously described.

The NBR is as previously described.

The temperature and time of the degradation reaction are as previously described.

The type and amount of organic solvents are as previously described.

The inert gases are as previously described.

In a preferable embodiment of the present invention, the reaction process for the degradation method of the NBR was as shown in route-3, wherein the degradation reaction of NBR II to NBR IIb was carried out by adding Zhan catalyst in an organic solvent under inert gas protection; wherein j, k, m' and n' were defined as previously described.

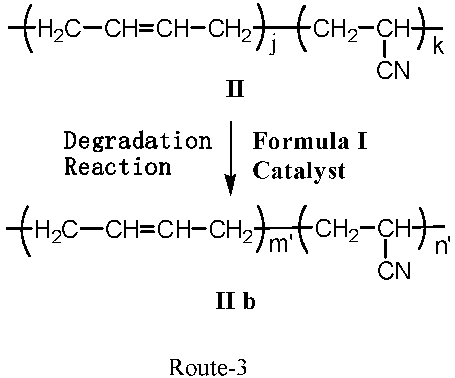

### The Fifth Technical Solution:

A rubber compound comprising the LHNBR, a filler and a vulcanizing agent.

In the present invention, the filler may be conventional, and preferably carbon black and/or silica. The carbon black is preferably carbon black N220, carbon black N-330, carbon black N550 or carbon black N774. The silica is preferred, such as precipitated silica, fumed silica or alkaline silica. The precipitated silica is precipitated water & silica. The fumed silica refers to fumed silica. The basic silica is preferably basic silica AS-70, the basic silica AS-70 being a mixture of sodium aluminium silicate and silica, wherein the mass fraction of silica is 0.8%.

In the present invention, the vulcanizing agent may be conventional, preferably 1,4-bis(tert-butylperoxyisopropyl)benzene (trade name F-40).

In the present invention, the rubber compound may further comprise other rubber compounding agents customary in addition to the vulcanizing agent, such as one or more of co-sulfurizing agents, stearic acid, magnesium oxide, accelerators and antioxidants, wherein, the co-sulfurizing agent is preferably N,N'-m-phenylenebismaleimide (trade name PDM).

The accelerator is preferably 2-mercaptobenzimidazole zinc salt (MBZ).

The antioxidant is preferably 4,4'-bis(dimethylbenzyl)diphenylamine (antioxidant 445).

In a preferable embodiment of the present invention, the rubber compound comprises, in parts by weight, 100 parts of LHNBR, 50 parts of carbon black N-330, 10 parts of silica AS-70, 14 parts of 1,4-bis(tert-butylperoxyisopropyl)benzene (F-40), 0.5 parts of N,N'-m-phenylenebismaleimide (PDM), 0.5 parts of stearic acid, 6 parts of magnesium oxide, 0.5 parts of 2- Zinc salt of mercaptobenzimidazole (MBZ), and 1.0 part of 4,4'-bis(dimethylbenzyl)diphenylamine (antioxidant 445).

In the present invention, the adhesive material can be prepared by means of methods customary, generally comprising the mixing of the components. The mixing may be carried out in a compacting machine using methods conventional. The mixing is preferably in stepwise.

### The Sixth Technical Solution:

A vulcanized rubber, which is produced by vulcanizing the rubber materials.

In the present invention, the vulcanisation may be carried out by conventional methods conventional. The vulcanisation preferably comprises: using an electric plate vulcaniser to vulcanize a section of the rubber at 180°C x 8 minutes; the product from the section of vulcanisation is then vulcanized in a second section at 150°C x 4 hours and then cooled to room temperature to obtain a vulcanized rubber.

In the present invention, the vulcanized rubber may have a Shore hardness of 60 or more, preferably 80 or more. The elongation at break of the vulcanized rubber may be more than 160, preferably more than 190. 100% elongation strength of the vulcanized rubber may be 3 to 4 MPa.

### The Seventh Technical Solution:

An application of the LHNBR, the adhesive or the vulcanized adhesive in industrial products.

Wherein, the industrial article preferably comprises a sealant, a binder, a coating, a potting material or an elastomeric article. The coating preferably an electromagnetic shielding coating, an oil resistant coating, a battery corrosion resistant coating or a damping and noise reduction coating. Preferred, the binder is a solid propellant binder or an ablative material binder. The elastomeric products are in particular shaped and complex elastomeric products.

### DEFINITION OF TERMS:

The acrylonitrile content (ACN%) refers to the weight percentage content of the acrylonitrile fragment in NBR or HNBR.

Hydrogenation degree: the degree of hydrogenation of the olefin double bond in a polymer, expressed by the iodine method.

The molecular weight polydispersity index (PDI): the ratio of the weight average molecular weight to the number average molecular weight in a polymer is known as the polydispersity index, i.e. the molecular weight polydispersity index (PDI).

Mooney viscosity: all the Mooney viscosities described in this invention are Mooney viscosities [ML (1+4) 100°C], which is a measure of the average molecular weight and plasticity of rubbers.

Glass transition temperature (Tg): that refers to the temperature at which the high elastic state is transformed into the glass state or the glass table is loaded into the high elastic state. The glass transition is an inherent property of amorphous polymer materials and is a macroscopic manifestation of the transformation of polymer motion, it directly affects the use of material performance and process performance, the glass transition temperature (Tg) is located between the extrapolated glass transition start temperature (Tig) and extrapolated glass transition end temperature (Teg).

On the basis of common knowledge, each of the above preferable conditions can be combined in any way to obtain a preferable example of the invention.

All of the reagents and raw materials used in the present invention are commercially available.

The positive and progressive effects of the present invention are as follows:
1. The invention used "Zhan catalyst" to produce a low molecular weight (Mw 3,000~60,000) LHNBR with a broader molecular weight polydispersity (PDI=2.0-8.0) through a unique catalytic degradation reaction and followed by the hydrogenation reaction technique. It has excellent flowability during processing and excellent physical properties after vulcanisation, and has unique applications in the field of special rubbers.
2. The method provided by the preparation technology in the present invention simplifies the preparation process method of the prior art, used Zhan catalysts with the same metal (Ru) system, enabled degradation and hydrogenation to be completed in one process, effectively and easily prepared LHNBR for various applications, broadened the application field of LHNBR, and had obvious technical advantages.

### DETAILED DESCRIPTION OF THE INVENTION

The invention is further illustrated below by some embodiments, but the invention is not thereby limited to the following described embodiments. Experimental methods for which no specific conditions are indicated in the following embodiments follow the conventional methods and conditions, or are selected according to the trade description.
Zhan catalysts used in the following embodiment were the compounds 4aa and/or 4v of general formula I, as documented in our granted patent CN200910175790.6, with the following structures:

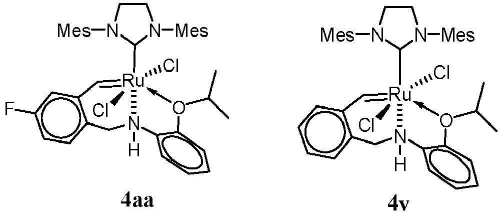

The raw material NBR and LHNBR product raw rubber, and the relevant characteristic parameters of the rubber material involved in the following embodiments, are expressed by testing according to the following methods:
(1) Acrylonitrile content: Tested in accordance with the method specified in the standard SH/T 1157.2-2015 "Determination of bound acrylonitrile content in raw rubber acrylonitrile-butadiene rubber (NBR) Part 2: Kjeldahl method for nitrogen determination", with NMR hydrogen spectrometry analysis evaluation as an auxiliary verification method.
(2) Hydrogenation degree: tested according to the method specified in the standard SH/T 1763 "Determination of residual unsaturation in hydrogenated nitrile butadiene rubber (HNBR) of nitrile rubber (NBR) by the iodine titration method".
(3) Glass transition temperature (Tg): tested by DSC8500 differential scanning calorimeter in accordance with the method specified in the standard GB/T 29611-2013 "Determination of glass transition temperature of raw rubber by differential scanning calorimetry (DSC)".
(4) Molecular weight and molecular weight polydispersity index (PDI): tested by ECS000113 type room temperature gel permeation chromatograph (Z-1601) in accordance with the method specified in the standard GB/T21863-2008 "Gel Gel permeation chromatography (GPC) with tetrahydrofuran as eluent".

### Example 1

Under nitrogen displacement conditions, 100 g of NBR [ACN 33%, ML(1+4) 35, 100°C] was added into 500 mL of anhydrous chlorobenzene to a 1L stainless steel reactor, completely dissolved at 60°C under nitrogen seal conditions, then added "Zhan catalyst" (4v) at a dosage of 0.03% of NBR, the degradation reaction of NBR was carried out at 80°C for 1.5 hours to obtain a LNBR degradate; hydrogen was then introduced until the pressure reached 8 MPa and the temperature was increased to 150°C. The reaction was carried out for 4 hours to obtain a LHNBR solution. The solution of the hydrogenation reaction product was removed from the chlorobenzene solvent at 130°C under negative pressure to obtain a LHNBR raw rubber with a product yield of >98%.

The characteristic parameters of the resulting raw LHNBR were: molecular weight (Mw) of 37,950, molecular weight polydispersity index of 2.1, ACN of 33%, Hydrogenation degree of 92% (iodine value: 24), and glass transition temperature (Tg) of -31.2°C (Tig: -31.7°C; Teg: -26.9°C).

### Example 2

Under nitrogen displacement conditions, 100g of NBR [ACN 33%, ML(1+4) 35 at 100°C] was added into 500mL of anhydrous chlorobenzene to a 1L stainless steel reactor, after completed dissolution at 60°C under nitrogen sealing, then added "Zhan catalyst" (4v) at a dosage of 0.04% of the NBR, degradation of the NBR at 80°C for 1 hour to obtain LNBR, hydrogen was then introduced until the pressure reached 8 MPa and the temperature was increased to 150°C. The reaction was carried out for 5 hours to obtain a LHNBR solution. The solution of the hydrogenation reaction product was removed from the chlorobenzene solvent at 130°C under negative pressure to obtain a raw LHNBR with a product yield of >98%.

The characteristic parameters of the resulting raw LHNBR were: molecular weight (Mw) of 44960, molecular weight polydispersity index: 2.2, ACN: 33%, Hydrogenation degree: 96% (iodine value: 14), and glass transition temperature (Tg): -32.5°C (Tig: -36.1°C; Teg: -28.8°C).

### Sample 3

Under nitrogen displacement conditions, 100 g of NBR [ACN of 33%, ML(1+4) 35 at 100°C] was added 500 mL of anhydrous chlorobenzene to a 1L stainless steel reactor, dissolved completely at 60°C under nitrogen seal, then added Zhan catalyst (4v) at a dosage of 0.05% of NBR; the degradation reaction of the NBR was carried out at 80°C and the reaction was carried out for 1 hour to obtain LNBR; hydrogen was then introduced until the pressure reached 8 MPa and the temperature was increased to 150°C. The reaction was carried out for 6 hours to obtain a highly hydrogenated LHNBR solution. The solution of the hydrogenation reaction product is removed from the chlorobenzene solvent at 130°C under negative pressure to obtain a raw LHNBR with a product yield of >98%.

The properties of the resulting raw LHNBR were: molecular weight (Mw) of 45140, molecular weight polydispersity index: 2.2, combined ACN: 33%, hydrogenation degree: 99% (iodine value: 8), and glass transition temperature (Tg): -29.8°C (Tig: -33.5°C; Teg: -26.2°C).

### Sample 4

Under nitrogen displacement conditions, 100 g of NBR [ACN 33%, ML(1+4) 35 at 100°C] was added 500 mL of anhydrous chlorobenzene to a 1 L stainless steel reactor, after completed dissolution at 60°C under nitrogen sealing conditions, then added Zhan catalyst (4v) at a dosage 0.06% of the NBR. The NBR was subjected to a degradation reaction at 80°C for 2 hours to obtain LNBR; hydrogen is then introduced to a pressure of 8 MPa and the reaction was carried out at 150°C for 6 hours to obtain a highly hydrogenated LHNBR solution. The solution of the hydrogenation product was removed from the chlorobenzene solvent at 130°C under negative pressure, resulting in a raw LHNBR with a yield of >98%.

The characteristic parameters of the resulting raw LHNBR were: molecular weight (Mw) of 243.5 million, molecular weight polydispersity index: 2.4, ACN: 33%, hydrogenation: 99% (iodine value: 8), and glass transition temperature (Tg): -30.9°C (Tig: -31.5°C; Teg: -27.2°C).

### Sample 5

Under nitrogen displacement conditions, 100 g of nitrile rubber [33% acrylonitrile by weight, Moonny viscosity ML(1+4) 35 at 100°C] was added 500 mL of anhydrous chlorobenzene to a 1L stainless steel reactor, completely dissolved at 60°C under nitrogen seal conditions, then added Zhan catalyst (4v) at a dosage of 0.06% of the NBR, NBR was subjected to a degradation reaction at 80°C for 2.5 hours to obtain LNBR; hydrogen was then introduced until the pressure reached 8 MPa and the temperature was increased to 150°C. The reaction was carried out for 6 hours to obtain a highly hydrogenated LHNBR solution. The solution of the hydrogenation reaction product was removed from the chlorobenzene solvent at 130°C under negative pressure to obtain a raw LHNBR with a product yield of >98%.

The characteristic parameters of the resulting raw LHNBR were: molecular weight (Mw): 8210, molecular weight polydispersity index: 2.7, ACN: 33%, hydrogenation: 99% (iodine value: 8) and glass transition temperature (Tg): -42.8°C (Tig: -49.8°C; Teg: -36.2°C).

### Sample 6

Under nitrogen displacement, 100 g of liquid nitrile rubber [33% acrylonitrile by weight, molecular weight (Mw) 15780, molecular weight polydispersity index 3.2] and 500 mL of anhydrous chlorobenzene were added to a 1 L stainless steel reactor, under nitrogen seal, added Zhan catalyst (4aa) at 60°C at a dosage 0.03% of NBR, hydrogen was then introduced until the pressure reached 8 MPa and then the temperature was increased to 150°C. The reaction was carried out for 4 hours to obtain a highly hydrogenated LHNBR solution. The solution of the hydrogenation reaction product was removed from the chlorobenzene solvent at 130°C under negative pressure to obtain a raw LHNBR with a product yield of >98%.

The characteristic parameters of the resulting LHNBR raw rubber were: molecular weight (Mw) of 16250, molecular weight polydispersity index: 3.3, ACN: 33%, hydrogenation: 99% (iodine value: 7) and glass transition temperature (Tg): -38.8°C (Tig: -44.5°C; Teg: -33.9°C).

### Sample 7

Under nitrogen displacement conditions, 100 g of LNBR [ACN 43%, molecular weight (Mw) 32660, molecular weight polydispersity index 4.3] and 500 mL of anhydrous chlorobenzene were added to a 1 L stainless steel reactor, under nitrogen sealing conditions, added Zhan catalyst (4aa) at 60°C at a dosage of 0.02% of NBR, then hydrogen was introduced until the pressure reached 8 MPa and the temperature was increased to 150°C. The reaction was carried out for 3 hours to obtain a highly hydrogenated LHNBR solution. The solution of the hydrogenation reaction product was removed from the chlorobenzene solvent at 130°C under negative pressure to obtain a raw LHNBR with a product yield of >98%.

The characteristic parameters of the resulting raw LHNBR were: molecular weight (Mw) of 33420, molecular weight polydispersity index: 4.3, ACN: 43%, hydrogenation: 91% (iodine value: 25) and glass transition temperature (Tg): -30.2°C (Tig: -34.7°C; Teg: -26.9°C).

### Sample 8

Under nitrogen displacement conditions, 100 g of LNBR [25% acrylonitrile by weight, molecular weight (Mw) 32770, molecular weight polydispersity index 5.5] and 500 mL of anhydrous chlorobenzene were added to a 1 L stainless steel reactor, under nitrogen sealing conditions, add Zhan catalyst (4aa) at 60°C at a dosage of 0.03% of theNBR, then hydrogen was introduced until the pressure reached 8 MPa and then the temperature was increased to 150°C. The reaction was carried out for 4 hours to obtain a highly hydrogenated LHNBR solution. The solution of the hydrogenation reaction product was removed from the chlorobenzene solvent at 130°C under negative pressure to obtain a raw LHNBR with a product yield of >98%.

The characteristics of the resulting raw LHNBR are: molecular weight (Mw) of 33,950, molecular weight polydispersity index: 5.6, ACN: 25%, hydrogenation degree: 95% (iodine value: 13) and glass transition temperature (Tg): -32.9°C (Tig: -36.6°C; Teg: -29.4°C).

### Sample 9

### 1. Preparation of vulcanized rubber

In parts by weight, the rubber material comprised: 100 parts of LHNBR (raw rubber obtained from Example 3), 14 parts of F-40, 0.5 parts of PDM, 0.5 parts of stearic acid, 6 parts of magnesium oxide, 50 parts of carbon black N-330, 10 parts of silica AS-70, 0.5 parts of MBZ and 1.0 parts of antioxidant 445.
Preparation of rubber and vulcanized rubber according to the following process steps:
(1) Mixing: first, the components of the the rubber material were put into the kneader machine and mixed at 30-60°C for 8-10min and then forced to discharge the rubber; then, a section of the rubber material obtained from mixing is thinly passed or ground 3-5 times on an open refiner or a three-roller mill, discharged and parked for 12 hours to obtain the required rubber material.
(2) Vulcanisation: using an electric plate vulcaniser, a section of the above rubber was vulcanized at 180°C x 8 minutes; then a section of the vulcanized specimen is vulcanized at 150°C x 4 hours and then cooled to room temperature to obtain a vulcanized rubber.

### 2. Vulcanized rubber performance test

Test Shore A hardness according to GB/T 531.1-2008 with GSD-719K type rubber hardness tester; test standard according to GB/T 528-2009, GB/T 529-2008 and GB/T 532-2008 respectively, in AI-7000-LU type. The tensile and fracture properties were tested on an electronic tensile tester. The performance test results are shown in Table 1.

**Table 1 Vulcanized rubber properties**

| | |
|---|---|
| Shore hardness | 82 |
| Breaking strength, MPa | 7.6 |
| Elongation at break, % | 199 |
| 100% set tensile strength, MPa | 3.1 |

### Sample 10

The raw LHNBR obtained from Example 4 was used, and other preparation steps and conditions were the same as in Example 9 to produce the vulcanized rubber, the performance test results of which are shown in Table 2.

**Table 2 Vulcanized rubber properties**

| | |
|---|---|
| Shore hardness | 67 |
| Breaking strength, MPa | 4.8 |
| Elongation at break, % | 163 |
| 100% set tensile strength, MPa | 3.5 |

## Claims

1. A liquid hydrogenated nitrile butadiene rubber, wherein:
the acrylonitrile content is from 15% ~ 50%;
the hydrogenation degree is from 75% ~ 99.5%;
the weight average molecular weight is from 3,000 ~ 60,000;
the molecular weight polydispersity index is from 2.0 ~ 8.0;
the glass transition temperature is below -28°C.

2. The liquid hydrogenated nitrile butadiene rubber according to claim 1, wherein,
the liquid hydrogenated nitrile butadiene rubber has an acrylonitrile content of 17 -45%, e.g. 25%, 33% or 43%; and/or,
the liquid hydrogenated nitrile butadiene rubber has a hydrogenation degree of 80% -99%, preferably 90% -99%, e.g. 91%, 92%, 95% or 96%;
and/or, the liquid hydrogenated nitrile butadiene rubber has the weight average molecular weight of 5,000 ~50,000, preferably 8,000 ∼ 20,000 or 24,000 ∼ 46,000;
and/or, the liquid hydrogenated nitrile butadiene rubber has a molecular weight polydispersity index of 2.0- 6.0;
and/or, the liquid hydrogenated nitrile butadiene rubber having a glass transition temperature of lower than -35°C, preferably lower than -40°C;
and/or, the liquid hydrogenated nitrile butadiene rubber having an extrapolated glass transition onset temperature of lower than -30°C, preferably lower than -35°C, more preferably lower than -45°C;
and/or, the liquid hydrogenated nitrile butadiene rubber having an extrapolated glass transition end temperature of lower than -25°C, preferably lower than 30°C, and more preferably lower than -35°C;
preferably, the liquid hydrogenated nitrile butadiene rubber is a liquid hydrogenated nitrile butadiene rubber shown in formula IIIa or IIIb. 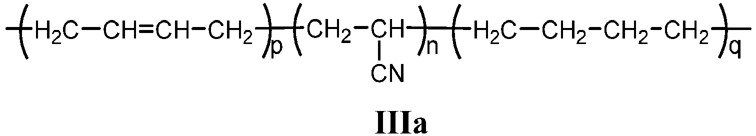 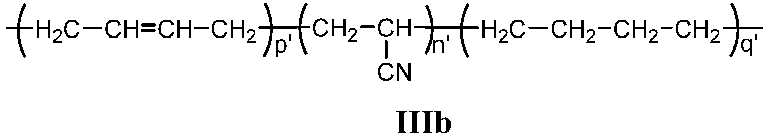
wherein, p = 1-150; p'= 1-150; q = 30-590; q'= 30-590; n = 20-500; n' = 20-500; preferably, in the liquid hydrogenated nitrile butadiene rubber: the acrylonitrile content was from 17% to 45%; the hydrogenation degree was from 80% to 99%; the weight average molecular weight was 5,000 to 50,000; the molecular weight polydispersity index was from 2.0 to 6.0; and the glass transition temperature was lower than -28°C;
preferably, in the liquid hydrogenated nitrile butadiene rubber: the acrylonitrile content was of 33%; the hydrogenation degree was 99%; the weight average molecular weight was from 8,000 to 20,000; the molecular weight polydispersity index was from 2.5 to 3.5; and the glass transition temperature was lower than -35°C;
preferably, in the liquid hydrogenated nitrile butadiene rubber: the acrylonitrile content was 25% ∼ 43%; the hydrogenation degree was from 91% to 99%; the weight average molecular weight was from 24,000 to 46,000; the molecular weight polydispersity index was from 2.1 ∼ 5.6; and the glass transition temperature was below -29°C.

3. A method for the preparation of a liquid hydrogenated nitrile butadiene rubber comprising the steps of: adding NBR to a degradation reaction and a hydrogenation reaction, or adding NBR to a hydrogenation reaction, in the presence of Zhan catalyst, under the protection of an inert gas in an organic solvent, to obtain liquid hydrogenated nitrile butadiene rubber; wherein the catalyst comprises one or more of the Zhan catalysts shown in general formula I: 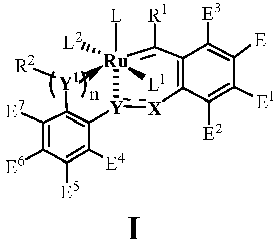
in thegeneral formula I: L is an electron-donating complex ligand;
L¹ and L² are independently halogen;
n = 0 or 1;
when n=1, Y¹ is independently nitrogen, oxygen, sulphur, CH₂ substituted or unsubstituted C₁-C₂₀ alkyl, substituted or unsubstituted C₆-C₂₀ aryl, substituted or unsubstituted C₆-C₂₀ aryloxy, substituted or unsubstituted C₂-C₂₀ heterocyclic aryl, carbonyl, carbonyl linked to a substituted or unsubstituted C₁-C₂₀ alkyl, carbonyl linked to a substituted or unsubstituted C₁-C₂₀ alkoxy, imino, substituted or unsubstituted C₁-C₂₀ alkyl imino or amino as shown in R_{c}R_{d}N- group; wherein, Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl or substituted or unsubstituted C₂-C₂₀ heterocyclic formyl; or Rc, Rd and the N atom are linked each other to form a ring;
X is nitrogen, oxygen, sulphur, CH, CH₂ or carbonyl group;
Y is nitrogen, oxygen, CH, methylene, substituted or unsubstituted C₁-C₂₀ alkoxy, substituted or unsubstituted C₆-C₂₀ aryl, substituted or unsubstituted C₆-C₂₀ aryl, substituted or unsubstituted C₂-C₂₀ heterocyclic aryl, a carbonyl group linked to a substituted or unsubstituted C₁-C₂₀ alkyl, a carbonyl group linked to a substituted or unsubstituted C₁-C₂₀ alkoxy, an imino group, a substituted or unsubstituted C₁-C₂₀ alkyl imino group or a group as shown in R_{c}R_{d}N-group; wherein, Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkylcarbonyl, substituted or unsubstituted C₆-C₂₀ arylcarbonyl or substituted or unsubstituted C₂-C₂₀ heterocycliccarbonyl group; or Rc, Rd and N atoms linked to form a ring; the parent to which the group indicated by X linkedis Y, and the parent to which the group indicated by Y linkedis X; "X Y" between the X and Y is single or double bonds;
R¹ is hydrogen, substituted or unsubstituted C₁-C₂₀ alkyl, substituted or unsubstituted C₁-C₂₀ alkoxy, substituted or unsubstituted C₆-C₂₀ aryl, substituted or unsubstituted C₆-C₂₀ aryloxy or substituted or unsubstituted C₂-C₂₀ heterocyclic group;
R² is hydrogen, substituted or unsubstituted C₁-C₂₀ alkyl, substituted or unsubstituted C₁-C₂₀ alkoxy, substituted or unsubstituted C₁-C₂₀ alkylthio, substituted or unsubstituted C₁-C₂₀ alkylsiloxy, substituted or unsubstituted C₂-C₂₀ heterocyclic, substituted or unsubstituted C₆-C₂₀ aryl, C₆-C₂₀ aryloxy, aldehyde, carbonyl group linked to a substituted or unsubstituted C₁-C₂₀ alkyl, carbonyl group linked to a substituted or unsubstituted C₆-C₂₀ aryl, carbonyl group linked to a substituted or unsubstituted C₂-C₂₀ heterocyclic or a group as shown in R_{c}R_{d}N-group; wherein Rc and Rd are independently hydrogen, formyl, substituted or unsubstituted C₁-C₂₀ alkyl formyl group, substituted or unsubstituted C₆-C₂₀ aryl formyl group, substituted or unsubstituted C₂-C₂ heterocyclic formyl group; or wherein Rc, Rd and the N atom are linked each other to form a ring;
E is hydrogen, halogen, nitro, nitrile, sulfinyl, sulfone, aldehyde, C₁-C₂₀ alkyl, C₁-C₂₀ alkoxy, C₁-C₂₀ alkylthio, C₁-C₂₀ alkyl silyl, C₁-C₂₀ alkyl siloxy, C₂-C₂₀ heterocyclic, C₆-C₂₀ aryl, C₆-C₂₀ aryloxy, carbonyl linkedlinked to C₁-C₂₀ alkyl, carbonyl linked to C₆-C₂₀ aryl C6-C20 heterocyclic, carbonyl linked to C₂-C₂₀ heterocyclic, carbonyl linked to C₁-C₂₀ alkoxy, carbonyl linked to C₆-C₂₀ aryloxy, carbonyl linked to C₆-C₂₀ heterocyclic oxy, aminoacyl, carbonyl linked to C₁-C₂₀ alkylamino, carbonyl linked to C₆-C₂₀ arylamino, carbonyl linked to C₂-C₂₀ heterocyclic amino, ureido, substituted or unsubstituted C₁-C₂₀ alkyl ureido, substituted or unsubstituted C₆-C₂₀ aryl ureido, substituted or unsubstituted C₂-C₂₀ heterocyclic ureido, sulfonyl group linked to a C₁-C₂₀ alkyl amino group, sulfonyl group linked to a C₆-C₂₀ aryl amino group, sulfonyl group linked to a C₂-C₂₀ heterocyclic amino group, or a group as shown in R_{c}R_{d}N- group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, or substituted or unsubstituted C₂-C₂₀ heterocyclic sulfonyl group; or Rc, Rd and the N atom are linked each other to form a ring;
E¹ is hydrogen, halogen, nitro, nitrile, C₁-C₂₀ alkyl, C₁-C₂₀ alkoxy, C₁-C₂₀ alkylthio, C₁-C₂₀ alkasilyl, C₁-C₂₀ alkasiloxy, C₂-C₂₀ heterocyclic, substituted or unsubstituted amino, aminoacyl, carbonyl linked to C₁-C₂₀ alkylamino, C₆-C₂₀ aryl, C₆-C₂₀ aryloxy, sulfinyl, sulfone group, aldehyde group, carbonyl group linked to a C₁-C₂₀ alkyl group, carbonyl group linked to a substituted or unsubstituted C₆-C₂₀ aryl group, carbonyl group linked to a substituted or unsubstituted C₂-C₂₀ heterocyclic group, carbonyl group linked to a C₁-C₂₀ alkoxy group, carbonyl group linked to a C₆-C₂₀ aryloxy group, carbonyl group linked to a C₂-C₂₀ heterocyclic oxy group, urea group, substituted or unsubstituted C₁-C₂₀ alkyl urea group , substituted or unsubstituted C₆-C₂₀ aryl ureido group, substituted or unsubstituted C₂-C₂₀ heterocyclic ureido group;
E² is hydrogen, halogen, C₁-C₂₀ alkyl, C₁-C₂₀ alkoxy, C₁-C₂₀ alkylthio, C₁-C₂₀ alkyl silyl, C₁-C₂₀ alkyl siloxy, aminoacyl, carbonyl linked to C₁-C₂₀ alkylamino, carbonyl linked to C₆-C₂₀ arylamino, carbonyl linked to C₂-C₂₀ heterocyclic amino, C₆-C₂₀ aryl, C₆-C₂₀ aryl oxy, C₂-C₂₀ heterocyclic aryl, aldehyde, a carbonyl group linked to a C₁-C₂₀alkyl group, a carbonyl group linked to a C₆-C₂₀ aryl group, a carbonyl group linked to a C₂-C₂₀ heterocyclic group, a carbonyl group linked to a C₁-C₂₀ alkoxy group, a carbonyl group linked to a C₆-C₂₀ aryloxy group, a carbonyl group linked to a C₂-C₂₀ heterocyclic oxy group or a group as shown in R_{c}R_{d}N- group; wherein Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, or substituted or unsubstituted C₂-C₂₀ heterocyclic sulfonyl group; or Rc, Rd and the N atom are linked each other to form a ring;
E³ is hydrogen, halogen, C₁-C₂₀ alkyl, C₁-C₂₀ alkoxy, C₁-C₂₀ alkylthio, C₁-C₂₀ alkyl siloxy, C₆-C₂₀ aryloxy, C₆-C₂₀ aryl, C₂-C₂₀ heterocyclic aryl, a carbonyl group linked to a C₁-C₂₀ alkoxy, a carbonyl group linked to a substituted or unsubstituted C₆-C₂₀ aryloxy, a carbonyl group linked to a substituted or unsubstituted C₆-C₂₀ heterocyclic aryloxy or a group as shown in R_{c}R_{d}N- group; wherein, Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, or substituted or unsubstituted C₂-C₂₀ heterocyclic sulfonyl group; or Rc, Rd and the N atom are linked each other to form a ring;
E⁴, E⁵, E⁶ and E⁷ are independently hydrogen, halogen, nitro, nitrile, sulfinyl, sulfonyl, aldehyde, substituted or unsubstituted C₁-C₂₀ alkyl, substituted or unsubstituted C₁-C₂₀ alkoxy, C₁-C₂₀ alkylthio, C₁-C₂₀ alkasilyl, C₁-C₂₀ alkasiloxy, substituted or unsubstituted C₂-C₂₀ heterocyclic, substituted or unsubstituted amino, amino acyl, carbonyl groups linked to substituted or unsubstituted C₁-C₂₀ alkylamino groups, carbonyl groups linked to substituted or unsubstituted C₆-C₂₀ arylamino groups, carbonyl groups linked to substituted or unsubstituted C₂-C₂₀ heterocyclic amino groups, carbonyl groups linked to substituted or unsubstituted C₁-C₂₀ alkyl groups, carbonyl groups linked to substituted or unsubstituted C₆-C₂₀ aryl groups, carbonyl groups linked to substituted or unsubstituted C₂-C₂₀ heterocyclic group, carbonyl group linked to substituted or unsubstituted C₁-C₂₀ alkoxy, carbonyl group linked to substituted or unsubstituted C₆-C₂₀ aryloxy, carbonyl group linked to substituted or unsubstituted C₆-C₂₀ heterocyclic oxy, ureido, substituted or unsubstituted C₁-C₂₀ alkyl ureido, substituted or unsubstituted C₆-C₂₀ aryl ureido, substituted or unsubstituted C₂-C₂₀ heterocyclic based ureido, substituted or unsubstituted C₆-C₂₀ aryl, substituted or unsubstituted C₆-C₂₀ aryloxy, or a group as shown in R_{c}R_{d}N- group; wherein, Rc and Rd are independently hydrogen, substituted or unsubstituted C₆-C₂₀ aryl, substituted or unsubstituted C₂-C₂₀ heterocyclic, substituted or unsubstituted C₁-C₂₀ alkyl, formyl, substituted or unsubstituted C₁-C₂₀ alkyl formyl, substituted or unsubstituted C₆-C₂₀ aryl formyl, substituted or unsubstituted C₂-C₂₀ heterocyclic formyl, substituted or unsubstituted C₁-C₂₀ alkyl sulfonyl, substituted or unsubstituted C₆-C₂₀ aryl sulfonyl, substituted or unsubstituted C₂-C₂₀ heterocyclic sulfonyl group; or Rc, Rd and the N atom are linked each other to form a ring.

4. The method for the preparation of liquid hydrogenated nitrile butadiene rubber according to Claim 3, wherein that the general formula I comprises one or more of the following compounds: 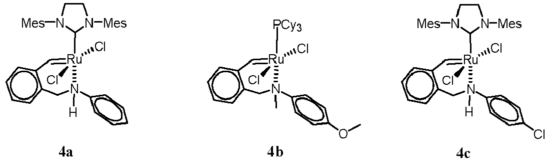 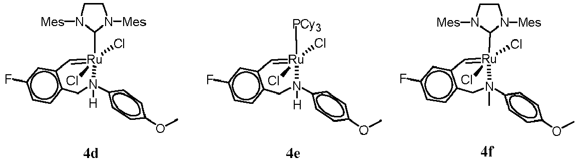 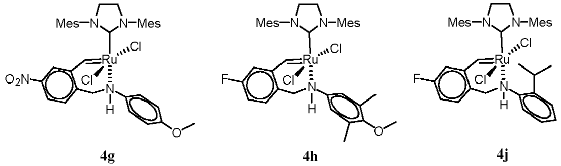 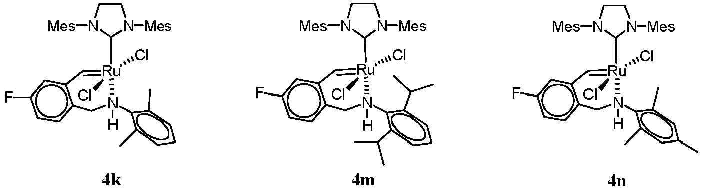 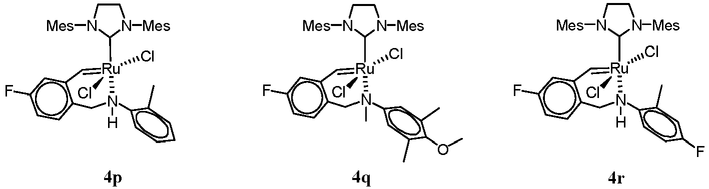 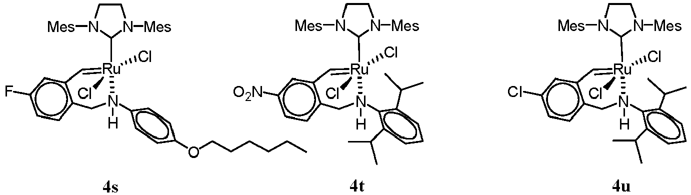 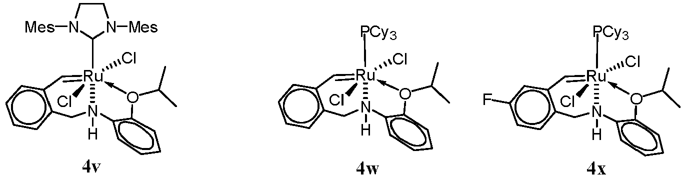 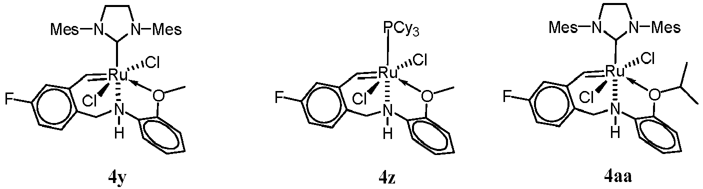 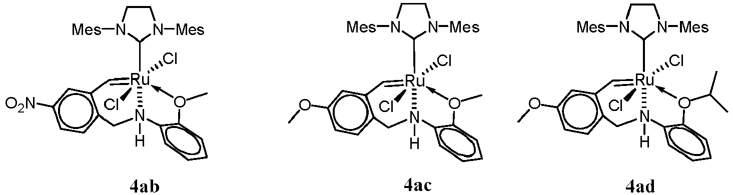 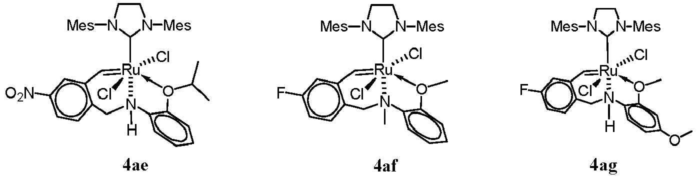 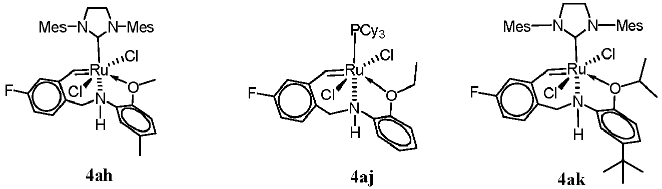 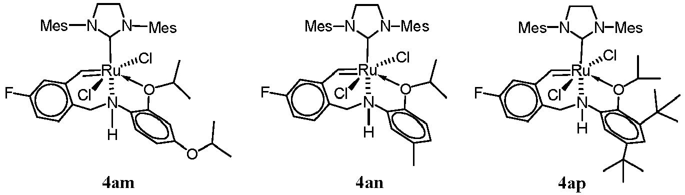 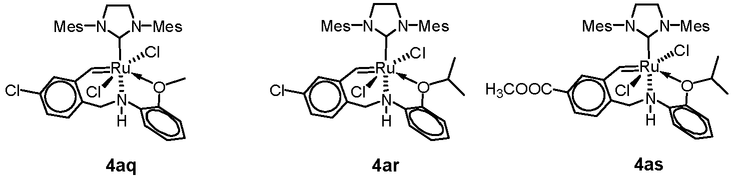 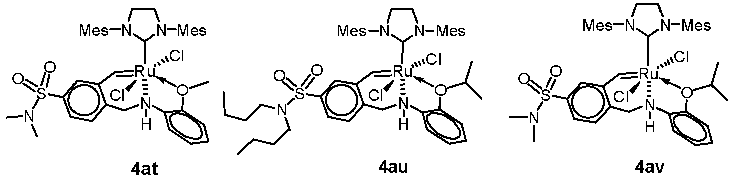 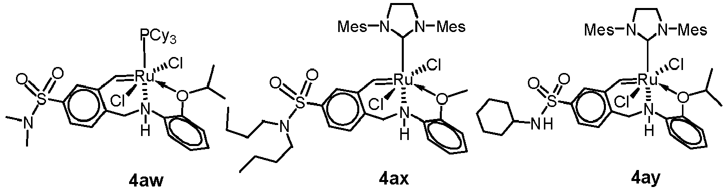 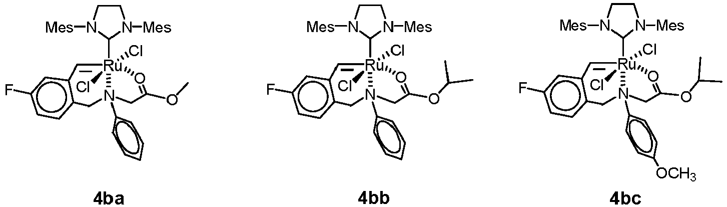 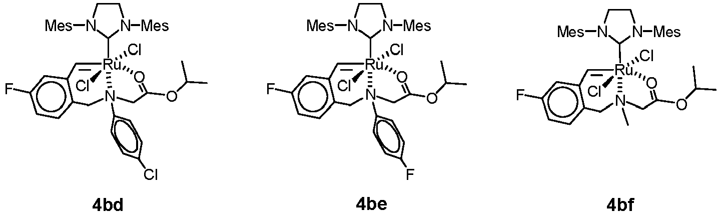 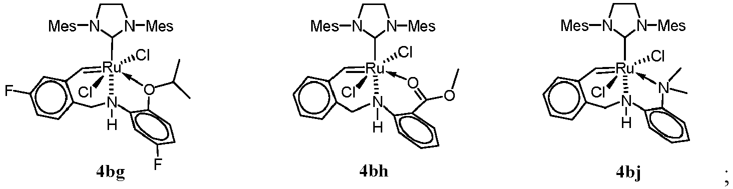
in the general formula I, the preferable formula is 4aa, 4ab, 4f or 4v, and the more preferable formula is 4aa or 4v;
and/or, the NBR has an acrylonitrile content of 15% to 50%, preferably 17% to 45%, e.g. 25%, 33% or 43%;
and/or, the NBR having the weight average molecular weight of 3,000~60,000;
and/or, preferred, the NBR has a meniscus viscosity of 30~60;
and/or, the NBR having a molecular weight polydispersity index of 2.0- 8.0;
preferably, the NBR has a structure as shown in formula II, IIa or IIb as follows: 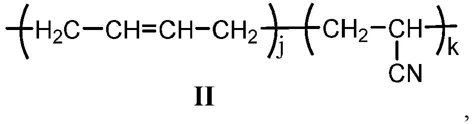 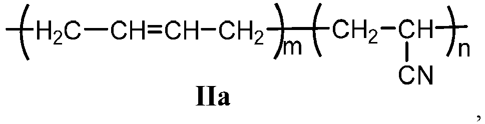 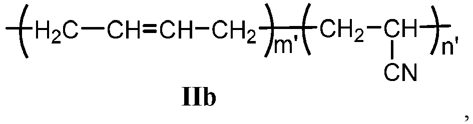
wherein,
j=100-6000; k=50-5000;
m=30-600; n=20-500;
m'=30-600; n'=20-500;
and/or, the amount of Zhan catalyst is 0.005%-0.1%, preferably 0.01%-0.05%, the percentage being the Zhan catalyst as a percentage by weight of the nitrile rubber;
and/or, the degradation reaction at a temperature of 60-100°C, preferably 80°C; the degradation reaction at a time of 0.5-10hours, preferably 1-6 hours, more preferably 2-3 hours;
and/or, the amount of hydrogen in the hydrogenation reaction is such that the pressure of the reaction system reaches 2 to 15 MPa, preferably 6 to 10 MPa, e.g. 8 MPa;
and/or, the temperature of the hydrogenation reaction is 80 to 200°C, preferably 100 to 180°C, more preferably 130 to 160°C, for example 150°C; the time of the hydrogenation reaction is 2 to 6 hours;
and/or, the organic solvent is one or more of trichloromethane, dichloroethane, acetone and chlorobenzene; preferably one or more of chlorobenzene, dichloroethane and trichloromethane; more preferably , chlorobenzene or dichloroethane; best still, chlorobenzene; the organic solvent is preferably in an amount of 100 to 300 g of NBR/1L of organic solvent, for example 120 g, 160 g, 200 g or 240 g of NBR/1L of organic solvent.
and/or, the inert gas is argon or nitrogen;
and/or, when the hydrogenation reaction is completed, a post-treatment is conducted; the post-treatment comprises removing the organic solvent under negative pressure; the post-treatment is preferably at a temperature of 100 to 150°C, more preferably at 130 to 140°C.

5. The method of preparation of liquid hydrogenated nitrile butadiene rubber according to claim 3 or 4, wherein that the reaction flow of the method of preparation of liquid hydrogenated nitrile butadiene rubber was as shown in route-1, in an organic solvent under the protection of an inert gas, with the passage of hydrogen, and the addition of the Zhan catalyst at the same time as or after the passage of hydrogen to the NBR IIa solution for the hydrogenation reaction to obtain liquid hydrogenated nitrile butadiene rubber IIIa.; wherein, m, n, p and q are defined as described in Claim 2 or 4; 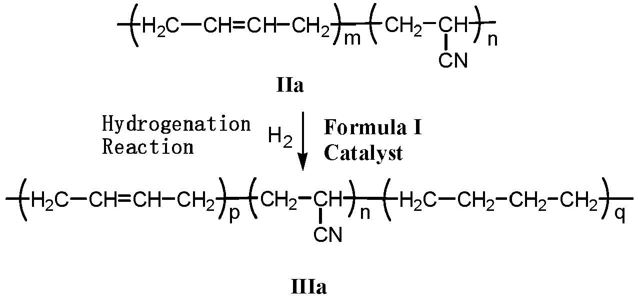 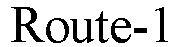 and/or, the reaction flow of the preparation method of liquid hydrogenated nitrile butadiene rubber was as shown in route-2, wherein the degradation reaction of NBR II was carried out to obtain NBR IIb by adding Zhan catalyst in an organic solvent under the protection of an inert gas; then hydrogen was passed to carry out the hydrogenation reaction of NBR lib to obtain liquid hydrogenated nitrile butadiene rubber IIIb; wherein, j, k, m', n', p' and q' are defined as described in Claim 2 or 4;

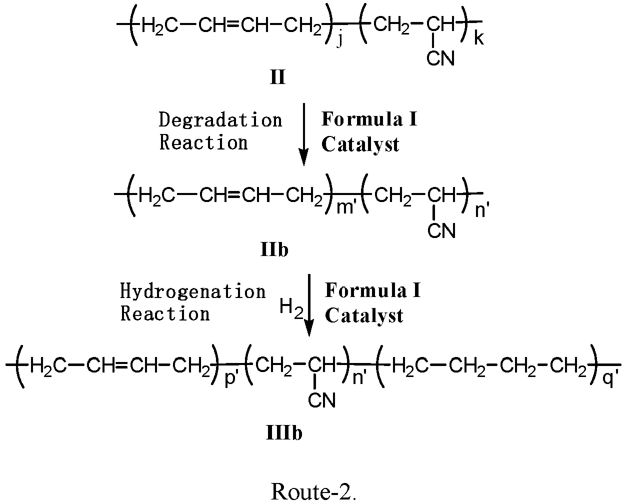

6. A liquid hydrogenated nitrile butadiene rubber prepared according to the method of preparing liquid hydrogenated nitrile butadiene rubber according to any one of claims 3~5.

7. A method for the degradation reaction of NBR comprising the steps of: adding the NBR to a degradation reaction in an organic solvent under the protection of an inert gas in the presence of Zhan catalyst of the general formula I to obtain a NBR degradation product; 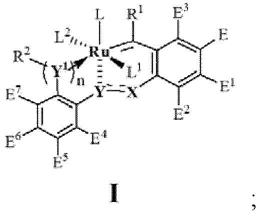
preferably, the Zhan catalyst and the amount thereof are as described in Claim 4;
preferably, the NBR is as described in Claim 4;
preferably, the temperature and time of degradation reaction is as described in Claim 4;
preferably, the organic solvent and the amount thereof is as described in Claim 4;
preferably, the inert gas is as described in Claim 4;
preferably, the reaction process for the degradation method of NBR is shown in Route-3,

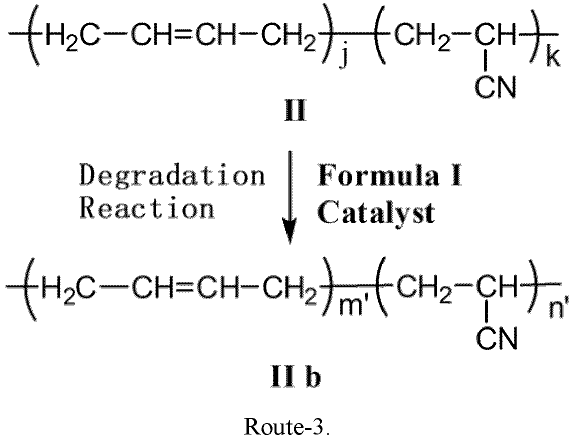

8. An rubber compound comprising the liquid hydrogenated nitrile butadiene rubberaccording to any one of Claims 1, 2 and 5, filler and vulcanizing agent;
the filler is preferably carbon black and/or silica; the carbon black is preferably carbon black N220, carbon black N-330, carbon black N550 or carbon black N774; the silica is preferably precipitated silica, fumed silica or alkaline silica; the alkaline silica is preferably alkaline silica AS-70;
the vulcanizing agent is preferably 1,4-bis(tert-butylperoxyisopropyl)benzene;
the rubber compound preferably further comprising other rubber compounding agents than the vulcanizing agent, such as one or more of a co-sulfurizing agent, stearic acid, magnesium oxide, accelerator and antioxidant; wherein the co-sulfurizing agent is preferably N,N'-m-phenylenebismaleimide; the accelerator is preferably zinc salt of 2-mercaptobenzimidazole; the antioxidant is preferably 4,4'-bis(dimethylbenzyl)diphenylamine;
preferably, the rubber compound comprises, in parts by weight: 100 parts of liquid hydrogenated nitrile butadiene rubber, 50 parts of carbon black N-330, 10 parts of silica AS-70, 14 parts of 1,4-bis(tert-butylperoxyisopropyl)benzene, 0.5 parts of N,N'-m-phenylene braced bismaleimide, 0.5 parts of stearic acid, 6 parts of magnesium oxide, 0.5 parts of zinc salt of 2-mercaptobenzimidazole and 1.0 parts of 4,4 '-bis(dimethylbenzyl)diphenylamine.

9. A vulcanized rubber, produced by vulcanizing the rubber compound of Claim 8.

10. The use of the liquid hydrogenated nitrile butadiene rubber according to any one of Claims 1, 2 and 5, the rubber compound according to Claim 8 or the vulcanized rubber according to Claim 9 in industrial products.
